(19) Europäisches Patentamt
European Patent Office
Office européen des brevets

(11) Veröffentlichungsnummer: **0 301 347 B1**

(12) **EUROPÄISCHE PATENTSCHRIFT**

(45) Veröffentlichungstag der Patentschrift: **22.01.92**

(51) Int. Cl.⁵: **C08C 19/08**, C08F 36/18

(21) Anmeldenummer: **88111503.4**

(22) Anmeldetag: **18.07.88**

Die Akte enthält technische Angaben, die nach dem Eingang der Anmeldung eingereicht wurden und die nicht in dieser Patentschrift enthalten sind.

# (54) Polychloroprenmischungen.

(30) Priorität: **29.07.87 DE 3725042**

(43) Veröffentlichungstag der Anmeldung: **01.02.89 Patentblatt 89/05**

(45) Bekanntmachung des Hinweises auf die Patenterteilung: **22.01.92 Patentblatt 92/04**

(84) Benannte Vertragsstaaten: **DE FR GB**

(56) Entgegenhaltungen:
**EP-A- 0 089 539**
**EP-A- 0 175 245**
**DE-A- 2 306 610**
**US-A- 3 984 609**

(73) Patentinhaber: **BAYER AG**
**W-5090 Leverkusen 1 Bayerwerk(DE)**

(72) Erfinder: **Wendling, Peter**
**Franz-Marc-Strasse 9**
**W-5090 Leverkusen(DE)**
Erfinder: **Obrecht, Werner, Dr.**
**Holderbergerstrasse 108**
**W-4130 Moers 2(DE)**
Erfinder: **Göbel, Wilhelm, Dr.**
**Max-Beckmann-Strasse 37**
**W-5090 Leverkusen(DE)**
Erfinder: **Musch, Rüdiger, Dr.**
**Altenberger-Dom-Strasse 169**
**W-5060 Bergisch-Gladbach 2(DE)**
Erfinder: **Casper, Rudolf, Prof. Dr.**
**St. Ingberter-Strasse 3**
**W-5090 Leverkusen(DE)**
Erfinder: **Müller, Eberhard, Dr.**
**Pfauenstrasse 19**
**W-4047 Dormagen(DE)**

EP 0 301 347 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Polychloroprenmischungen, die in der Summe der anwendungstechnischen Eigenschaften aus Vulkanisationsgeschwindigkeit, Zugfestigkeit, Bruchdehnung, Modul, Weiterreißfestigkeit und Hitzebeständigkeit des Vulkanisates Vorteile gegenüber dem Stand der Technik zeigen.

Als Stand der Technik sind Polychloroprenkautschuke zu betrachten, die entweder in Gegenwart von Kettenübertragungsmitteln wie Mercaptanen und Xanthogendisulfiden oder in Gegenwart von Schwefel unter Verwendung geeigneter Modifikatoren wie Tetraalkylthiuramdisulfiden hergestellt werden (s. Logemann in Houben-Weyl, Methoden der organischen Chemie, Band 14/1 (1961) Seite 733-752.

Das Eigenschaftsbild dieser, den Stand der Technik repräsentierenden, Polychloroprenkautschuke ist hinreichend bekannt.

So zeigt mercaptangeregeltes, im Vergleich mit xanthogendisulfidgeregeltem und mit schwefelhaltigem Polychloropren niedrigere Zugfestigkeiten, niedrigere Spannungswerte und niedrigere Weiterreißfestigkeiten bei guter Hitzebeständigkeit der Vulkanisate.

Von xanthogendisulfidgeregeltem Polychloropren ist bekannt, daß es gegenüber mercaptangeregeltem Polychloropren ein günstigeres Scorchverhalten zeigt und zu Vulkanisaten mit höheren Spannungswerten und höheren Zugfestigkeiten führt. Gegenüber mercaptangeregeltem und schwefelmodifiziertem Polychloropren ist die langsamere Vulkanisationsgeschwindigkeit des xanthogendisulfidgeregelten Polychloroprens von Nachteil.

Schwefelmodifiziertes Polychloropren zeigt im Vergleich mit mercaptan- und xanthogendisulfidgeregeltem Polychloropren eine hohe Vulkanisationsgeschwindigkeit und ein hohes Niveau der Vulkanisatwerte (Zugfestigkeit, Modul, Bruchdehnung, Weiterreißfestigkeit) vor der Alterung. Von Nachteil ist der starke Abfall der mechanischen Eigenschaften wie z.B. Zugfestigkeit und Bruchdehnung bei Alterung in heißer Luft.

Aus EP-A 175 245 und aus US-PS 3 984 609 sind schwefelmodifizierte Polychloroprene bekannt, die in Gegenwart von Xantogendisulfid hergestellt wurden. Die erhaltenen Polychloroprene wurden Zwecks Viskositätserniedrigung peptisiert. Die in dem genannten Stand der Technik beschriebenen schwefelmodifizierten Polychloroprene zeigen im Hinblick auf das Verarbeitungsverhalten Nachteile.

Aus der DE-OS 2 306 610 ist die Herstellung von Xantogendisulfid-modifizierten Polychloroprenen, die schwefelmodifiziert sein können, bekannt. Die dort beschriebenen Polychloroprene weisen bei längerer Lagerung einen unerwünschten Viskositätsanstieg auf und zeigen eine geringere Vulkanisationsgeschwindigkeit.

Es wurde nun überraschend gefunden, daß der Stand der Technik bezüglich der Eigenschaftssumme aus Vulkanisationsgeschwindigkeit, Zugfestigkeit, Weiterreißfestigkeit, Bruchdehnung, Modul und Hitzbeständigkeit von Polychloroprenvulkanisaten übertroffen wird, wenn man die Latices von un- bzw. teilpeptisiertem, schwefelmodifiziertem Polychloropren und von xanthogendisulfidgeregeltem Polychloropren mischt, eine Peptisation des schwefelmodifizierten Polychloroprens in Gegenwart des xanthogendisulfidgeregelten Polychloroprens durchführt, das Polymere stabilisiert und nach dem Stand der Technik z.B. durch Gefrierkoagulation aus dem Latex isoliert.

Dieses Ergebnis war insofern überraschend, als sich die Eigenschaften des erfindungsgemäß hergestellten Polychloroprenkautschuks nicht additiv aus den Eigenschaften der einzelnen Mischungsbestandteile zusammensetzen. Das Eigenschaftsprofil des erfindungsgemäß hergestellten Polychloroprenkautschuks kann auch nicht mit Walzenmischungen der jeweils separat aus den Latices isolierten Polychloroprenkautschuke eingestellt werden. Auch die Herstellung eines Polychloroprenkautschuks aus einer gemeinsam peptisierten Latexmischung von mercaptangeregeltem und schwefelmodifiziertem Polychloropren führt nicht zum Ziel.

Gegenstand der Erfindung ist ein Verfahren zur Herstellung von Polychloroprenmischungen mit Mooney-Viskositäten von 5-150 (ML 1 + 4) 100 °C durch Mischen der Latices von A und B:

A) 5 bis 95 Gew.-% schwefelmodifiziertes un- oder teilpeptisiertes Polychloropren und

B) 95 bis 5 Gew.-% xanthogendisulfidgeregeltes Polychloropren

gemeinsame Peptisation, Stabilisation und Isolierung, wobei sowohl im Fall von unpeptisiertem Polychloropen A als auch im Fall von teilpeptisiertem Polychloropren A diese Peptisation nach Vereinigung der Latices A und B durchgeführt bzw. vollendet wird.

Die Mooneyviskosität (ML 1 + 4/100 °C) des isolierten Festkautschuks liegt bevorzugt zwischen 20 und 120 Mooneyeinheiten.

Der Gehalt an schwefelmodifiziertem Polychloropren im Festkautschukblend liegt bevorzugt zwischen 10 und 75 Gew.-%.

Geeignete Polychloroprenkautschuke sind solche, bei denen sowohl das schwefelmodifizierte als auch das xanthogendisulfidgeregelte Polychloropren bis zu 20 Gew.-% Comonomer enthalten. Bevorzugtes Comonomer ist 2,3-Dichlorbutadien.

Die Herstellung des schwefelmodifizierten Polychloroprens erfolgt beispielsweise wie in folgenden Offenlegungsschriften bzw. Patenten beschrieben:
DE-OS 2 018 736, EP 0 021 212, DE-OS 3 246 748 und DE-OS 3 507 825.

Für die Herstellung der Mischung aus schwefelmodifiziertem Polychloropren und xanthogendisulfidgeregeltem Polychloropren wird das schwefelmodifizierte Polychloropren in unpeptisiertem oder teilpeptisiertem Zustand eingesetzt.

Die Herstellung des schwefelmodifizierten Polychloroprens erfolgt im ersten Fall z.B. nach DE-OS 2 018 736, wobei de Peptisation erst nach Zugabe des xanthogendisulfidgeregelten Polychloroprens wie in DE-OS 2 018 736 beschrieben, durchgeführt wird. Das schwefelmodifizierte Polychloropren ist vor der Peptisation in Benzol oder Toluol nicht vollständig löslich und wird durch den Gehalt an löslichen bzw. unlöslichen Anteilen in diesen Lösungsmitteln charakterisiert.

Teilpeptisiertes schwefelmodifiziertes Polychloropren wird z.B. nach DE-OS 3 246 748 erhalten, wenn man im ersten Schritt der Peptisation nur einen Bruchteil der maximal notwendigen Menge an Peptisationsmittel einsetzt. Die weitere Peptisation erfolgt dann nach Zugabe des xanthogendisulfidgeregelten Polychloroprens. Das teilpeptisierte schwefelmodifizierte Polychloropren hat eine Mooney-Viskosität von 70 - 120 ME (ML 1+4/100 °C) und ist in Benzol oder Toluol vollständig löslich.

Auch schwefelmodifiziertes Polychloropren, wie es nach DE-OS 3 507 825 erhalten wird, ist für die Herstellung der Latexmischungen geeignet. In diesem Fall verwendet man in Polymerisationsschritt nur so viel Peptisationsmittel, daß teilpeptisierte Produkte erhalten werden, die nach der Mischung mit xanthogendisulfidgeregeltem Polychloropren weiterpeptisiert werden. Eine andere Möglichkeit besteht darin, daß man das xanthogendisulfidgeregelte Polychloropren zu einem Polymerisationsansatz gibt, in dem man schwefelmodifiziertes Polychloropren nach DE-OS 2 018 736 herstellt. In diesem Fall führt man 10 % bis 20 % der Polymerisation inclusive Peptisation in Gegenwart des schwefelmodifizierten Polychloroprens durch.

Die Menge an elementarem Schwefel, die bei der Herstellung des schwefelmodifizierten Polychloroprens verwendet wird, liegt zwischen 0,05 und 1,5 Gew.-%, bevorzugt 0,1 bis 1,0 Gew.-%, bezogen auf Monomere.

Führt man die Peptisation des schwefelmodifizierten Polychloroprens ohne weitere Latexzusätze durch und isoliert das Polymere aus dem Latex, so zeigt sich, daß schwefelmodifizierte Polychloroprenkautschuke geeignet sind, die im Molgewichtsbereich mit Brookfieldviskositäten von 20.000 cP (20 °C) bis zu Mooneyviskositäten von ML 1+4 (100 °C) 150 liegen. Bevorzugt sind schwefelmodifizierte Polychloroprenkautschuke im Mooneybereich ML 1+4 (100 °C) 10 bis 120 Mooneyeinheiten.

Als xanthogendisulfidgeregelte Polychloroprenkautschuke werden beispielsweise solche, wie in US-PS 2 321 693 und 2 567 117 oder GP-PS 512 458 und 952 156 oder DE-OS 1 186 215 beschrieben, verwendet. Bevorzugte xanthogendisulfid-geregelte Polychloroprenkautschuke sind die nach DE-OS 3 044 811, DE-OS 2 306 610 und DE-OS 2 156 453 hergestellten. Die Mooneyviskositäten Ml 1+4 (100 °C) separat aufgearbeiteten xanthogendisulfidgeregelten Polychloroprens liegen vorzugsweise zwischen 10 und 120 Mooneyeinheiten.

Die Mischung der Latices erfolgt nach der Abstoppung und vor oder nach der Entfernung nicht umgesetzter Monomerer.

Geeignete Agentien zum Abstoppen der Polymerisation sind z.B. Brenzkatechin und vorzugsweise Diethylhydroxylamin, das in einer Menge von 0,05 bis 0,15 Gew.-%, bezogen auf Monomere, vorzugsweise in Form einer wäßrigen Lösung eingesetzt wird.

Für die gemeinsame Peptisation des schwefelmodifizierten Polychloroprens mit xanthogendisulfidgeregeltem Polychloropren verwendet man die in den obengenannten Patenten verwendeten Chemikalien, insbesondere Thiuramdisulfide und Xanthogendisulfide entweder alleine oder in Kombination mit Aminen, Xanthogenaten, Dithiocarbamaten, Sulfit, Thiosulfat, Formamidinsulfinat, Formaldehydsulfoxylat, 2-Mercapto-1,3-benzothiazol und Mischungen derselben.

Zur Verbesserung der Lagerstabilität der Polymeren werden übliche Alterungsschutzmittel wie sterisch gehinderte Phenolderivate, Amine, Phosphite, Xanthogendisulfide oder Thiuramdisulfide eingesetzt. Bevorzugt sind Tetraalkylthiuramdisulfide, gegebenenfalls in Kombination mit Verbindungen der anderen Stoffklassen. Die Zugabe erfolgt als wäßrige Dispersion, organische Lösung oder wäßrige Emulsion einer organischen Lösung zum Latex vor oder nach der Entfernung nicht umgesetzter Monomere. Es werden bis zu 6 Ge.-% Tetraethylthiuramdisulfid (TETD) oder eine entsprechende molare Menge einer anderen Verbindung oder Mischungen von Verbindungen eingesetzt.

Die Isolierung des Festkautschuks aus der Latexmischung erfolgt z.B. durch Gefrierkoagulation des

Latex auf einer Walze, wie in US-P 2 187 146 beschrieben.

Die folgenden Beispiele beschreiben die vorliegende Erfindung, ohne sie jedoch einzuschränken.

Erfindungsgemäße Beispiele (1a-1d)

Schwefelmodifiziertes Polychloropren

Das schwefelmodifizierte Polychloropren wurde im wesentlichen nach DE-OS 2 018 736 Beispiel 1 hergestellt. Abweichend vom zitierten Patent wurden statt 0,6 Gew.-% 0.5 Gew.-% elementaren Schwefels, bezogen auf die Monomermischung, eingesetzt. Die Monomermischung enthielt 1,2 Gew.-% an 2,3-Dichlorbutadien. Die Polymerisation wurde, wie im zitierten Patent beschrieben mit Kaliumpersulfat und Silbersalz aktiviert und bei 45 °C bis zu einen Umsatz von 65 % auspolymerisiert. Die Polymerisation wurde, wie im zitierten Patent beschrieben, abgestoppt.

Ein Teil des unpeptisierten Polychloroprenlatex wurde zur Charakterisierung separat aufgearbeitet. Der Gelgehalt in Toluol betrug 75 Gew.-% und die Mooneyviskosität ML 1 + 4 (100 °C) wurde zu 180 bestimmt.

Für Vergleichsversuche und zur weiteren Charakterisierung des schwefelmodifizierten Polychloroprenlatex wurde ein weiterer Teil des Latex separat peptisiert, von nicht umgesetzten Monomeren befreit und aufgearbeitet.

Für die Peptisation wurden abweichend von DE-OS 2 018 736 Beispiel 3 statt 1,0 Gew.-% 2,0 Gew.-% Tetraethylthiuramdisulfid und 0,1 Gew.-% Dibutylamin, jeweils bezogen auf ursprüngliche Monomermischung, eingesetzt. Für die Vergleichsversuche wurde das schwefelmodifizierte Polychloropren auf einen Mooneywert ML 1 + 4 (100 °C) von 50 peptisiert.

Zur Charakterisierung des schwefelmodifizierten Polychloroprens wurde ein Teil des Latex bis zum niedrigsten erreichbaren Mooneywert auspeptisiert. Dieser Mooneywert wurde zu ML 1 + 4 (100 °C) 15 bestimmt.

Der andere Teil des schwefelmodifizierten Polychloroprenlatex wurde vor deren Entfernung nicht umgesetzten Monomers und vor der Peptisation mit xanthogendisulfidgeregeltem Polychloroprenlatex gemischt und gemeinsam mit diesem peptisiert, entgast, stabilisiert und aufgearbeitet (siehe Latexmischung und gemeinsame Peptisation).

Xanthogendisulfidgeregeltes Polychloropren

Das xanthogendisulfidgeregelte Polychloropren wurde nach DE-OS 2 306 610 bzw. EP-OS 53 319 mit 0,74 Gew.-% Bis-(5-ethyl-1,3-dioxan-5-y-methyl)-xanthogendisulfid, bezogen auf Monomer, bei einer Temperatur von 35 °C hergestellt. Die Aktivierung erfolgte mit Formamidinsulfinsäure. Die Polymerisation wurde bis zu einem Umsatz von 65 % geführt und durch Zugabe von 0,1 Gew.-%, bezogen auf Latex, einer 2,5 gew-%igen wäßrigen Diethylhydroxylaminlösung abgestoppt.

Vor der Abmischung mit dem Latex unpeptisierten schwefelmodifizierten Polychloroprens wurde ein Teil des Latex für die Vergleichsbeispiele separat entgast und aufgearbeitet. Das xanthogendisulfidgeregelte Polychloropren hatte eine Mooneyviskosität ML 1 + 4 (100 °C) von 53.

Latexmischung und gemeinsame Peptisation

Der unpeptisierte, schwefelmodifizierte und der xanthogendisulfidgeregelte Polychloroprenlatex wurden in unterschiedlichen Mischungsverhältnissen gemischt (Beispiele 1a-1d), gemeinsam peptisiert, entgast und aufgearbeitet. Für die Peptisation wurden 2,0 Gew.% Tetraethylthiuramdisulfid und 0,1 Gew.-% Dibutylamin, bezogen auf den Feststoff des schwefelmodifizierten Polychloroprenanteils, eingesetzt.

Erfindungsgemäße Beispiele (2a-2d)

Für die Versuche dieser erfindungsgemäß hergestellten Polychloroprenkautschuke wurde das schwefelmodifizierte Polychloropren, wie unter den Beispielen 1a-d beschrieben, hergestellt. Für die Herstellung des xanthogendisulfidgeregelten Polychloroprens wurde Diisopropylxanthogendisulfid in einer Menge von 0,62 Gew.-Teilen, bezogen auf 100 Gew.-Teile Monomer, eingesetzt. Die übrigen Herstellungsbedingungen für das xanthogendisulfidgeregelte Polychloropren waren identisch mit denen des für die Beispiele 1a-d verwendeten xanthogendisulfidgeregelten Polychloroprens.

Für Vergleichsversuche wurde ein Teil des mit diisopropylxanthogendisulfidgeregeltenPolychloroprens separat aufgearbeitet. Es hatte eine Mooneyviskosität ML 1 + 4 (100 °C) von 50 Mooneyeinheiten.

Abweichend von den Beispielen 1a-d wurden die beiden Latices jeweils separat von nichtumgesetztem Monomer befreit und dann in unterschiedlichen Mischungsverhältnissen gemischt, peptisiert und aufgearbeitet (Mischungsverhältnisse siehe Tabellen).

Die Peptisationsbedingungen waren mit den für die Versuche 1a-d gewählten, identisch.

Vergleichsbeispiele

Vergleichsbeispiel 1

Vergleichsbeispiel 1 wurde nach DE-OS 2 306 610 in Gegenwart von Bis-(5-ethyl-1,3-dioxan-5-ylmethyl)-xanthogendisulfid hergestellt und entspricht dem für die Beispiele 1a-d verwendeten xanthogendisulfidgeregelten Polychloropren, das ohne Zusätze schwefelmodifizierten Polychloroprens separat aufgearbeitet wurde.

Vergleichsbeispiel 2

Vergleichsbeispiel 2 wurde in Gegenwart von Diisopropylxanthogendisulfid hergestellt und entspricht dem für die erfindungsgemäß hergestellten Beispiele 2a-d verwendeten xanthogendisulfidgeregelten Polychloropren, das ohne Zusätze schwefelmodifizierten Polychloroprens separat aufgearbeitet wurde.

Vergleichsbeispiel 3

Vergleichsbeispiel 3 ist ein Mercaptan-geregeltes Polychloropren und wurde nach DE-OS 3 002 711, Beispiel 13, hergestellt.

Vergleichsbeispiel 4

Vergleichsbeispiel 4 ist das schwefelmodifizierte Polychloropren der Beispiele 1a-d, das ohne Zusätze an xanthogendisulfidgeregeltem Polychloropren peptisiert und aufgearbeitet wurde. Es hatte einen Mooneywert ML 1+4 (100 °C) von 50 Mooneyeinheiten.

Vergleichsbeispiel 5

Mit diesem Vergleichsbeispiel wird ein Polymerblend aus schwefelmodifiziertem Polychloropren und mercaptongeregeltem Polychloropren beschrieben. Das schwefelmodifizierte Polychloropren entspricht dem der erfindungsgemäßen Beispiele 1a-d. Das mercaptangeregelte Polychloropren wurde nach DE-OS 3 002 711, Beispiel 13, hergestellt und wies eine Mooneyviskosität ML 1+4 (100 °C) von 53 auf.

Die Herstellung der Latexmischung und die nachfolgende Peptisation erfolgte wie in den Beispielen 1a-d beschrieben. Der so erhaltene Polychloroprenblend wies eine Mooneyviskosität ML 1+4 (100 °C) von 48 auf.

Vergleichsbeispiele 6a-c

Wie in den Beispielen 1a-d beschrieben, wurden das peptisierte, schwefelmodifizierte Polychloropren und das xanthogendisulfidgeregelte Polychloropren auch separat aufgearbeitet. Von diesen beiden Festkautschuken wurden drei Polymerblends verschiedener Zusammensetzung auf einer Walze hergestellt.

Vergleichsbeispiel 6a besteht aus 90 Gew.-Teilen xanthogendisulfidgeregeltem Polychloropren und 10 Gew.-Teilen schwefelmodifiziertem Polychloropren und weist eine Mooneyviskosität ML 1+4 (100 °C) von 54 ME auf. Die Vergleichsbeispiele 6b und 6c weisen Mischungsverhältnisse (in Gew.-Teilen) von 70:30 und 50:50 und Mooneyviskositäten ML 1+4 (100 °C) von 50 und 45 ME auf. Die Mischungsverhältnisse entsprechen denen der erfindungsgemäßen Beispiele 1a, 1c und 1d.

An den aus den Beispielen und Vergleichsbeispielen resultierenden Polymeren wurden folgende Prüfungen durchgeführt:

b) Rohkautschukprüfung

Die Mooneyviskosität (ML 1+4) wurde nach DIN 53 523, Teil 1-3, bei 100 °C bestimmt.

c) Vulkanisations- und Vulkanisatprüfungen

Die Vulkanisationen wurden auf der Basis von zwei Mischungen durchgeführt:

Mischung 1 (Iso-Mischung 2475):

100,0 Gew.-Teile Polymer
30,0 Gew.-Teile Ruß (N 762)
0,5 Gew.-Teile Stearinsäure
2,0 Gew.-Teile Phenyl-$\beta$-naphthylamin
4,0 Gew.-Teile Magnesiumoxid
5,0 Gew.-Teile Zinkoxid aktiv
0,5 Gew.-Teile Ethylenthioharnstoff

Mischung 2 (DIN 53 670, Teil 5):

100,0 Gew.-Teile Polymer
30,0 Gew.-Teile Ruß (N 762)
0,5 Gew.-Teile Stearinsäure
4,0 Gew.-Teile Magnesiumoxid
5,0 Gew.-Teile Zinkoxid aktiv

Die hergestellten Testmischungen wurden im Scher-Vulkameter DIN 53 529 bei 150 °C vulkanisiert und die Größen $t_{10}$, $t_{80}$ und $t_R$ bestimmt. $t_{10}$ und $t_{80}$ sind die Zeiten, bei denen 10 % bzw. 80 % des im Vulkameter bestimmbaren Umsatzes erreicht sind; $t_R$ erhält man als Differenz aus $t_{80} - t_{10}$.

Am Vulkanisat erfolgte die Bestimmung von Zugfestigkeit, Bruchdehnung und Modul bei 300 % Dehnung nach einer Vulkanisationszeit von 30 Minuten nach DIN 53 504.

Die Weiterreißfestigkeit wurde am Normring R 2 nach DIN 53 504 bestimmt. Dazu wurde der Ring auf der Innenseite mit 2 x 5 nebeneinanderliegenden 1 mm tiefen Einschnitten, versehen. Der Abstand der Einschnitte betrug 2 mm. Die beiden Gruppen von 5 Einschnitten lagen einander gegenüber.

Die eingeschnittenen Ringe wurden auf Rollen mit den Abmessungen für den Normring R 2, man vgl. DIN 53 504, Tabelle 3, gelegt und mit einer Vorschubgeschwindigkeit von 700 mm/min in einer Zugfestigkeitsmaschine auf Zug bis zum Bruch beansprucht.

Der Weiterreißwiderstand W oder die Strukturfestigkeit wird nach folgender Gleichung auf die Solldicke von $d_o$ = 4 mm umgerechnet und in N angegeben:

$$W = W_{gem} \cdot \frac{d}{d_o}$$

wobei

W [N] = gesuchter Weiterreißwiderstand
$W_{gem}$ [N] = gemessener Weiterreißwiderstand
$d_o$ [mm] = Solldicke
d [mm] = gemessene Dicke

Die mit Mischung 1 erhaltenen Vulkanisate wurden 14 Tage bei 100 °C gelagert. An den gelagerten Vulkanisaten wurde die Zugfestigkeit und Bruchdehnung bestimmt.

d) Ergebnisse

Serie 1): Mit diesen Versuchen wird gezeigt, daß die erfindungsgemäßen Beispiele 1a-d in der Summe der Eigenschaften aus: Vulkanisationsgeschwindigkeit, Zugfestigkeit, Bruchdehnung, Modul, Weiterreißfestigkeit und Hitzebeständigkeit, ein hohes Niveau zeigen, das von den Vergleichsbeispielen 1, 2, 3 und 4 nicht erreicht wird.

So weisen die Vergleichsbeispiele 1 und 2 zwar gute Vulkanisateigenschaften auf, erreichen jedoch nicht die Vulkanisationsgeschwindigkeit der erfindungsgemäßen Beispiele. Vergleichsbeispiel 3 zeigt bei vergleichbarer Vulkanisationsgeschwindigkeit deutlich schlechtere Vulkanisateigenschaften vor und nach Alterung als die erfindungsgemäß hergestellten Produkte. Vergleichsbeispiel 4 weist im Vergleich zu den

erfindungsgemäßen Beispielen eine deutlich schlechtere Alterungsbeständigkeit des Vulkanisates auf.
Serie 2): Die Ergebnisse dieser Serie zeigen, daß im Gegensatz zu den erfindungsgemäßen Beispielen eine Mischung aus mercaptangeregeltem und schwefelmodifiziertem Polychloropren (Vergleichsbeispiel 5) ohne Vulkanisationsbeschleuniger nur ungenügend vulkanisiert.
Serie 3): Diese Serie zeigt, daß die erfindungsgemäßen Beispiele 1a, 1c, 1d Walzenblends aus peptisiertem, schwefelmodifiziertem Polychloropren und xanthogendisulfidgeregeltem Polychloropren (Vergleichsbeispiele 6a, b, c) in der Summe der Eigenschaften aus: Zugfestigkeit, Bruchdehnung, Modul, Weiterreißfestigkeit und Hitzebeständigkeit überlegen sind. Insbesondere weisen die Vulkanisate der Walzenblends schlechtere Zugfestigkeiten und Weiterreißfestigkeiten als die erfindungsgemäßen Beispiele auf.

**Serie 1):** Vergleich erfindungsgemäßer Beispiele mit xanthogendisulfid- und mercaptan-geregeltem Polychloropren

| | Mischungsbestandteile des Blends mit Regler hergestelltes CR [Gew.-Teile] | Regler-typ | schwefelmodi-fiziertes CR [Gew.-Teile] | ML 1+4 [ME] | Vulkanisation $t_{10}$ [Min] | $t_{80}$ [Min] | $t_R$ [Min] |
|---|---|---|---|---|---|---|---|
| | | | | | Mischung 1 | | |
| Beispiel 1a) | 90 | 1) | 10 | 50 | 3 | 20 | 17 |
| Beispiel 1b) | 80 | 1) | 20 | 52 | 3 | 19 | 16 |
| Beispiel 1c) | 70 | 1) | 30 | 50 | 3 | 17 | 14 |
| Beispiel 1d) | 50 | 1) | 50 | 48 | 3 | 14 | 11 |
| Beispiel 2a) | 90 | 2) | 10 | 50 | 4 | 20 | 16 |
| Beispiel 2b) | 80 | 2) | 20 | 48 | 3 | 17 | 14 |
| Beispiel 2c) | 70 | 2) | 30 | 50 | 3 | 16 | 13 |
| Beispiel 2d) | 50 | 2) | 50 | 49 | 3 | 13 | 10 |
| Vergleichsbeispiel 1 | 100 | 1) | 0 | 53 | 4 | 23 | 19 |
| Vergleichsbeispiel 2 | 100 | 2) | 0 | 50 | 4 | 22 | 18 |
| Vergleichsbeispiel 3 | 100 | 3) | 0 | 53 | 3 | 16 | 13 |
| | | | | | Mischung 1 (ohne Beschleuniger) | | |
| Vergleichsbeispiel 4 | 0 | - | 100 | 50 | 4 | 11 | 7 |

1) Bis-(5-ethyl-1,3-dioxan-5-ymethyl)-xanthogendisulfid
2) Diisopropylxanthogendisulfid
3) n-Dodecylmercaptan

Serie 1): (Fortsetzung)

| | Mischungsbestandteile des Blends mit Regler hergestelltes CR [Gew.-Teile] | Reglertyp | schwefelmodifiziertes CR [Gew.-Teile] | ML1+4 [ME] | Vulkanisatwerte vor Alterung Zugfestigkeit [MPa] | Bruchdehnung [%] | $M_{100}$ [MPa] | Vulkanisatwerte nach Alterung (14 Tage/100°C) Weiterreißfestigkeit [N] | Zugfestigkeit [MPa] | Bruchdehnung [%] |
|---|---|---|---|---|---|---|---|---|---|---|
| | | | | | Mischung 1 | | | | | |
| Beispiel 1a) | 90 | 1) | 10 | 50 | 21,6 | 480 | 2,7 | 212 | 19,7 | 440 |
| Beispiel 1c) | 70 | 1) | 30 | 50 | 21,7 | 500 | 2,4 | 208 | 21,1 | 485 |
| Beispiel 1d) | 50 | 1) | 50 | 48 | 21,3 | 490 | 2,5 | 186 | 19,2 | 440 |
| Beispiel 2a) | 90 | 2) | 10 | 50 | 21,5 | 490 | 2,3 | 185 | 17,6 | 380 |
| Beispiel 2c) | 70 | 2) | 30 | 50 | 21,7 | 490 | 2,4 | 193 | 18,0 | 400 |
| Beispiel 2d) | 50 | 2) | 50 | 49 | 20,9 | 470 | 2,5 | 194 | 18,2 | 370 |
| Vergleichsbeispiel 1 | 100 | 1) | 0 | 53 | 22,2 | 500 | 2,6 | 213 | 20,2 | 455 |
| Vergleichsbeispiel 2 | 100 | 2) | 0 | 50 | 22,0 | 480 | 2,5 | 191 | 20,2 | 420 |
| Vergleichsbeispiel 3 | 100 | 3) | 0 | 53 | 18,4 | 420 | 2,4 | 153 | 16,9 | 360 |
| | | | | | Mischung 1 (ohne Beschleuniger) | | | | | |
| Vergleichsbeispiel 4 | 0 | - | 100 | 50 | 20,5 | 580 | 2,2 | 220 | 17,0 | 380 |

1) Bis-(5-ethyl-1,3-dioxan-5-ymethyl)-xanthogendisulfid
2) Diisopropylxanthogendisulfid
3) n-Dodecylmercaptan

Serie 2): Vergleich eines erfindungsgemäßen Beispiels mit einer Polymermischung aus mercaptangeregeltem Polychloropren und schwefelmodifiziertem Polychloropren

| | mit Regler hergestelltes CR [Gew.-Teile] | Regler typ | schwefelmodifiziertes CR [Gew.-Teile] | ML1 + 4 [ME] | Vulkanisation | | | Vulkanisateigenschafte | | |
|---|---|---|---|---|---|---|---|---|---|---|
| | | | | | $t_{10}$ | $t_{80}$ | $t_R$ | Zugfestigkeit [MPa] | Bruchdehnung [%] | $M_{300}$ [MPa] |
| | | | | | [Min] | | | | | |
| | | | | | Mischung 2 | | | | | |
| Beispiel 1a) | 90 | 1) | 10 | 50 | 4 | 32 | 28 | 13,1 | 620 | 4,8 |
| Vergleichsbeispiel 5 | 90 | 3) | 10 | 48 | 5 | 31 | 26 | ungenügend vulkanisiert* | | |

1) Bis-(5-ethyl-1,3-dioxan-5-ymethyl)-xanthogendisulfid

3) n-Dodecylmercaptan

* Die Probekörper verformten sich bereits bei der Entnahme aus der Form

Serie 3): Vergleich erfindungsgemäßen Beispiele mit Walzenblends

| | Vulkanisation | | | Vulkanisateigenschaften | | | | | |
|---|---|---|---|---|---|---|---|---|---|
| | $t_{10}$ [Min] | $t_{80}$ [Min] | $t_R$ [Min] | Zugfestigkeit [MPa] | Bruchdehnung [%] | $M_{100}$ [MPa] | Weiterreißfestigkeit [N] | Zugfestigkeit 14 Tage [MPa] | Bruchdehnung bei 100 °C [%] |
| | Mischung 1 | | | | | | | | |
| Beispiel 1a)[1)] | 3 | 20 | 17 | 21,6 | 480 | 2,7 | 212 | 19,7 | 440 |
| Beispiel 1c)[1)] | 3 | 17 | 14 | 21,7 | 500 | 2,4 | 208 | 21,1 | 485 |
| Beispiel 1d)[1)] | 3 | 14 | 11 | 21,3 | 490 | 2,5 | 186 | 19,2 | 440 |
| Vergleichsbeispiel 6a) | 2 | 19 | 17 | 19,5 | 480 | 2,3 | 157 | 17,9 | 420 |
| Vergleichsbeispiel 6b) | 3 | 16 | 13 | 19,2 | 490 | 2,3 | 165 | 18,0 | 435 |
| Vergleichsbeispiel 6c) | 3 | 15 | 12 | 19,2 | 470 | 2,2 | 171 | 17,7 | 420 |

1) Gew.-Teile der einzelnen Polychloroprene, siehe Serie 1)

## Patentansprüche

**1.** Verfahren zur Herstellung von Polychloropren-Mischungen mit Mooney-Viskositäten von 5 bis 150 (ML 1+4) 100 °C durch Mischen der Latices von A und B:

A) 5 bis 95 Gew.-% schwefelmodifiziertes un- oder teilpeptisiertes Polychloropren und
B) 95 bis 5 Gew.-% xanthogendisulfidgeregeltes Polychloropren

gemeinsame Peptisation, Stabilisation und Isolierung, wobei sowohl im Fall von unpeptisiertem Polychloropren A als auch im Fall von teilpeptisiertem Polychloropren A diese Peptisation nach Vereinigung der Latices A und B durchgeführt bzw. vollendet wird.

**2.** Verfahren nach Anspruch 1, wonach sowohl das schwefelmodifizierte als auch das xanthogendisulfidgeregelte Polychloropren bis zu 20 Gew.-% Comonomer enthalten.

**3.** Verfahren nach Anspruch 2, wonach das Comonomer 2,3-Dichlorbutadien ist.

**4.** Verfahren nach Ansprüchen 1 bis 3, wonach das schwefelmodifizierte Polychloropren mit 0,05 bis 1,5 Gew.-% Schwefel hergestellt wird.

**5.** Nach Verfahren gemäß Ansprüchen 1 bis 4 erhältliche Polychloroprene.

**6.** Verwendung der Polychloroprene nach Anspruch 5 zur Herstellung von Vulkanisaten.

## Claims

**1.** A process for the production of polychloroprene mixtures having Mooney viscosities of 5 to 150 (ML+4) 100 °C by mixing of latices of A and B:
A) 5 to 95% by weight sulfur-modified unpeptized or partly peptized polychloroprene and
B) 95 to 5% by weight xanthogene-disulfide-regulated polychloroprene,
co-peptization, stabilization and isolation; both in the case of unpeptized polychloroprene A and in the case of partly peptized polychloroprene A, peptization is carried out or completed after latices A and B have been combined.

**2.** A process as claimed in claim 1, in which both the sulfur-modified polychloroprene and the xanthogene-disulfide-regulated polychloroprene contain up to 20% by weight comonomer.

**3.** A process as claimed in claim 2, in which the comonomer is 2,3-dichlorobutadiene.

**4.** A process as claimed in claims 1 to 3, in which the sulfur-modified polychloroprene is prepared with 0.05 to 1.5% by weight sulfur.

**5.** Polychloroprenes obtainable by the process claimed in claims 1 to 4.

**6.** The use of the polychloroprenes claimed in claim 5 for the production of vulcanizates.

## Revendications

**1.** Procédé de préparation de mélanges de polychloroprènes ayant des viscosités Mooney de 5 à 150 (ML 1+4) 100 °C par mélange des latex de A) et B) :
A) 5 à 95 % en poids d'un polychloroprène modifié au soufre, non peptisé ou partiellement peptisé, et
B) 95 à 5 % en poids d'un polychloroprène réglé par un disulfure de xanthogène, peptisation en commun, stabilisation et isolement, sous réserve que, dans le cas d'un polychloroprène A) non peptisé comme dans le cas d'un polychloroprène A) partiellement peptisé, la peptisation est respectivement effectuée ou achevée après combinaison des latex A) et B).

2. Procédé selon la revendication 1, caractérisé en ce que le polychloroprène modifié au soufre et le polychloroprène réglé au disulfure de xanthogène contiennent jusqu'à 20 % en poids d'un comonomère.

3. Procédé selon la revendication 2, dans lequel le comonomère est le 2,3-dichlorobutadiène.

4. Procédé selon les revendications 1 à 3, dans lequel le polychloroprène modifié au soufre est préparé avec 0,05 à 1,5 % en poids de soufre.

5. Les polychloroprènes obtenus par un procédé selon les revendications 1 à 4.

6. Utilisation des polychloroprènes selon la revendication 5 pour la préparation de vulcanisats.